# EUROPEAN PATENT APPLICATION

(11) **EP 1 768 346 A1**
(43) Date of publication of application: **28.03.2007**
(21) Application number: 05020751.3
(22) Date of filing: 23.09.2005
(51) Int. Cl.: H04L 29/08, A63F 13/12, H04L 29/06, G06F 9/46

(54) **Provision of game applications across a network according to the display characteristics of a user terminal**

(71) Applicant: Microsoft Corporation, Redmond WA 98052 (US)
(72) Inventor: Stamper, Timothy David Joseph, Twycross, Warks CV9 3QN (GB)
(74) Representative: Free, Rachel Alder

(57) **Abstract**

The invention provides methods of and apparatus for providing an application to a user. The user requests the application (202) and in the request includes information on characteristics of the display (103) that they will use to view the application. In response to the request, the required level of resources (108) is determined (204) and then allocated to the user (205). The application is then run on these allocated resources (206) with display information being sent to the user (208) and user inputs being received from the user (210), to enable the user to control the application. The display information sent to the user is formatted according to the display (103) being used by the user. This is particularly suitable for providing game applications.

## Description

### BACKGROUND

Over the last decade, the games console has evolved considerably and the processing power of the console has increased significantly. New games have exploited the increases in processing capabilities of the consoles, enabling games to change from 2D to 3D, the graphics to become more detailed and realistic and the games to become more complex and challenging. However, games designers are still limited by the available processing power when writing new games and this is particularly true for handheld consoles or games players which are integrated with other devices such as PDAs (Personal Digital Assistants) and mobile phones.

To the user, the continued evolution of both consoles and the games written for those consoles results in an expensive problem. The user must frequently upgrade their hardware in order to be able to play the latest games and have the best quality graphics.

It is an object of the invention to mitigate disadvantages of known games consoles.

### SUMMARY

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.

A first aspect provides a method of providing an application to a user across a network comprising: receiving a request for an application from a user, the request including information on display characteristics for a user equipment; determining an amount of resources required to run the application for the user equipment; allocating the amount of resources to the user: determining display criteria from the information on display characteristics; and running the application using the allocated resources, wherein the step of running the application includes sending display information to the user equipment and receiving user input information from the user, wherein the display information is formatted according to the display criteria.

An advantage is that the provision of the application is independent of the hardware capability of the user's equipment. The user may therefore choose to upgrade their equipment for aesthetic reasons or to obtain an improved display, but they are not compelled to do so regularly in order to be able to run the newest applications available.

Another advantage is that the applications are platform-independent, i.e. any application can be used irrespective of the user equipment used by the user.

A further advantage is that the user can transfer from one user equipment to another in a seamless manner, e.g. when they move from equipment in the home or office to mobile user equipment.

Another advantage is that the resources required to run an application can be used in an efficient manner, with resources being shared between users and between applications, and with users being allocated an appropriate amount of resources depending on their specific requirements.

A further advantage is that the user equipment can be lower cost, because it only requires small processing capabilities and minimal memory.

Preferably the resources comprises at least one of processing power, memory and data storage.

Preferably the request includes user specified criteria and the step of determining an amount of resources is based on the application, the information on display characteristics and the user specified criteria.

Preferably the request includes user specified criteria and the step of determining display criteria is based on the information on display characteristics and the user specified criteria.

Preferably the user specified criteria include at least one of processing power, sound quality, memory, display quality, data storage and mode of operation of the application.

Preferably the request includes information on bandwidth of a network connection used by the user and the step of determining display criteria is based on the information on display characteristics and the information on bandwidth.

Preferably the request includes at least one of identification information, authentication information and billing information.

Preferably the method further comprises: stopping running the application in response to an input received from the user; and cancelling the allocation of the amount of resources to the user.

Preferably the request includes information on audio characteristics for the user equipment, the method further comprises: determining sound criteria from the information on audio characteristics, and wherein the step of running the application further includes sending audio information to the user equipment, the audio information being formatted according to the sound criteria.

Preferably the method further comprises: receiving a request from the user to run the application for a second user equipment, the request including information on display characteristics for the second user equipment; determining a second amount of resources required to run the application for the second user equipment; allocating additional resources to the user; determining second display criteria from the information on display characteristics for the second user equipment; sending second display information to the second user equipment, the second display information being formatted according to the second display criteria; stopping sending display information to the user equipment; and cancelling a portion of the resources allocated to the user, such that the second amount of resources remains allocated to the user.

Preferably the step of stopping sending display information occurs on receipt of an input from the user-

Preferably the application is a game.

A second aspect provides apparatus for providing an application to a user across a network, comprising a resource and a controller, wherein the controller comprises: means for receiving a request for an application from a user across a network; means for determining a portion of the resource required to run the application for the user equipment; means for allocating the portion to the user; means for detecting information on display characteristics for a user equipment from the request; means for determining display criteria from the information on display characteristics; and means for running the application using the portion of the resource, including sending display information to the user equipment and receiving user input information from the user, wherein the display information is formatted according to the display criteria.

Preferably the resource comprises at least one of a processing resource, a memory resource and a data storage resource.

Preferably the controller further comprises: means for detecting user specified criteria from the request; and means for determining the portion of the resource based on the application, the information on display characteristics and the user specified criteria.

Preferably the controller further comprises: means for receiving a second request from the user to run the application for a second user equipment; means for determining a second amount of resources required to run the application for the second user equipment: means for allocating additional resources to the user; means for detecting information on display characteristics for the second user equipment from the second request: means for determining second display criteria from the information on display characteristics for the second user equipment; means for sending second display information to the second user equipment, the second display information being formatted according to the second display criteria; means for stopping sending display information to the user equipment; and means for cancelling a portion of the resources allocated to the user, such that the second amount of resources remains allocated to the user.

Preferably the application is a game.

A third aspect provides apparatus for accessing an application from a remote server, comprising: a display; a user input device; and a communicator comprising: means for sending a request for an application to the remote server, the request including information on characteristics of the display; means for receiving display information from the remote server and pass it to the display, the display information being formatted for the display; and means for receiving user input information from the user input device and send it to the remote server, wherein the display information comprises graphical information associated with the application and the user input information controls the application on the remote server.

Preferably the request includes at least one of identification information, authentication information and billing information.

Preferably the application is a game.

Another example provides a method of billing for accessing an application. A user can be billed based on a combination of the application used, the level of resources required (which may be determined by the application used) and the length of time that the resources are used for.

The methods may be performed by software or firmware in machine readable form on a storage medium.

This acknowledges that software and firmware can be valuable, separately tradable commodities. It is intended to encompass software, which runs on or controls "dumb" or standard hardware, to carry out the desired functions, (and therefore the software essentially defines the functions of the register, and can therefore be termed a register, even before it is combined with its standard hardware). For similar reasons, it is also intended to encompass software which "describes" or defines the configuration of hardware, such as HDL (hardware description language) software, as is used for designing silicon chips, or for configuring universal programmable chips, to carry out desired functions.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 is a schematic diagram of a system for providing applications to a user;
FIG. 2 is a flow diagram showing an example method of operation of the system of FIG. 1;
FIG. 3 is a schematic diagram of a second system for providing applications to a user;
FIG. 4 is a flow diagram showing an example of operation of the system of FIG. 3;
FIG. 5 is a flow diagram showing a second example of operation of the system of FIG. 3;
FIG. 6 is a schematic diagram of a third system for providing applications to a user; and
FIG. 7 is a schematic diagram of a fourth system for providing applications to a user.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilised. The description sets forth the functions of the example and the sequence of steps for constructing and operating the example. However, the same or equivalent functions and sequences may be accomplished by different examples.

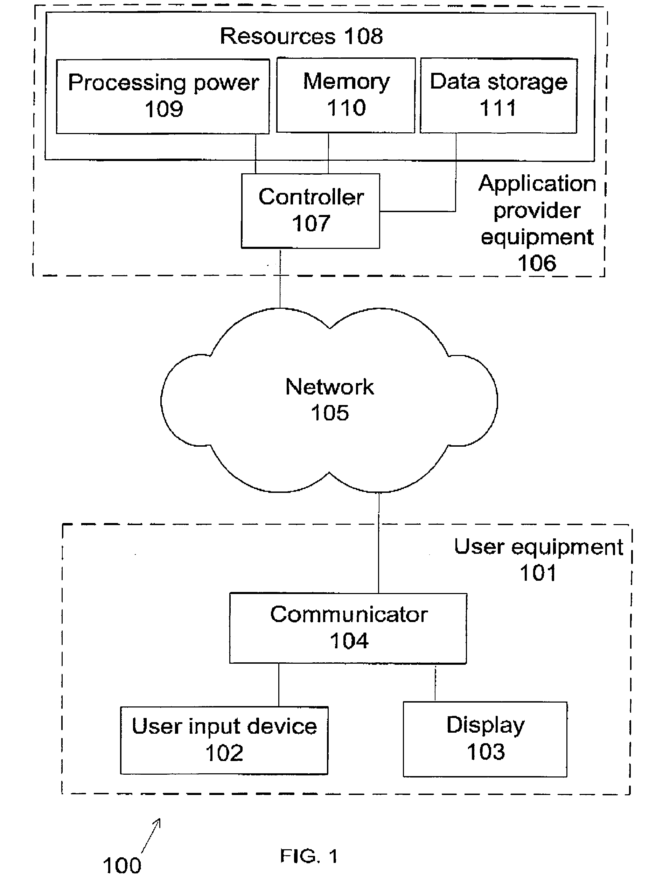

FIG. 1 shows a system 100 for providing applications to a user. The user accesses the applications via user equipment 101 which comprises a user input device 102, such as a keyboard, mouse or game controller, a display 103, such as a monitor, television or display screen, and a communicator 104. The user equipment 101 may be an integrated piece of equipment or may comprise separate functional entities that can communicate with each other via wired connections or over wireless links. Further examples of a user input device include a touch screen, a keypad, a camera, movement detectors etc.

The application is provided by application provider equipment 106 which comprises a controller 107 which is connected to the network 105. The controller is also connected to a number of resources 108, such as processing power 109, memory 110 and data storage 111. Applications are run on the application provider equipment 106 using its resources 108.

In order to access an application, the communicator 104 can connect to a network 105, which may be the internet, intranet, a local area network (LAN), or other suitable network. The network 105 may be a wired network or a wireless network or may include parts which are wired (e.g. the core part of the network) and parts which are wireless (e.g. the access part of the network). The communicator 104 passes display information received via the network to the display 103 such that the user can view the application graphics and the communicator 104 also passes user inputs received from the user input device 102 to the application provider equipment 106 over the network 105. These user inputs are interpreted and implemented at the application provider equipment 106 such that the user can control the application as if it was running locally.

The term "application" is used herein to refer to a computer program designed for a specific use. The term includes standard computer applications including, but not limited to, word processing applications, spreadsheet applications, e-mail, information display and web browsing applications, multimedia applications for video / audio streaming, gaming applications, specialist applications (e.g. design applications, analytical applications, business software) and databases.

Although the present examples are described and illustrated herein as being implemented in a system as shown in FIG. 1, the system described is provided as an example and not a limitation. As those skilled in the art will appreciate, the present examples are suitable for application in a variety of different types of systems.

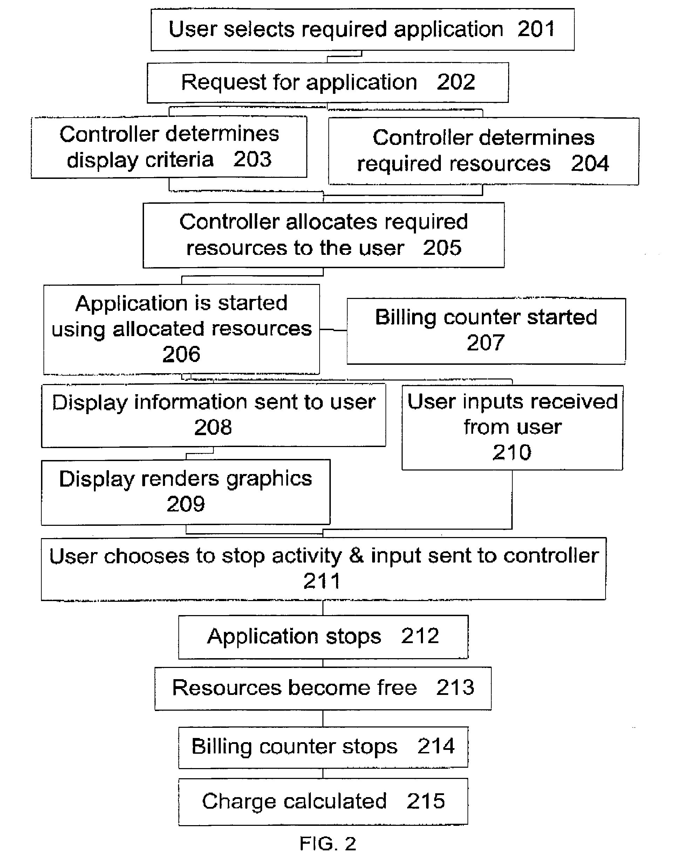

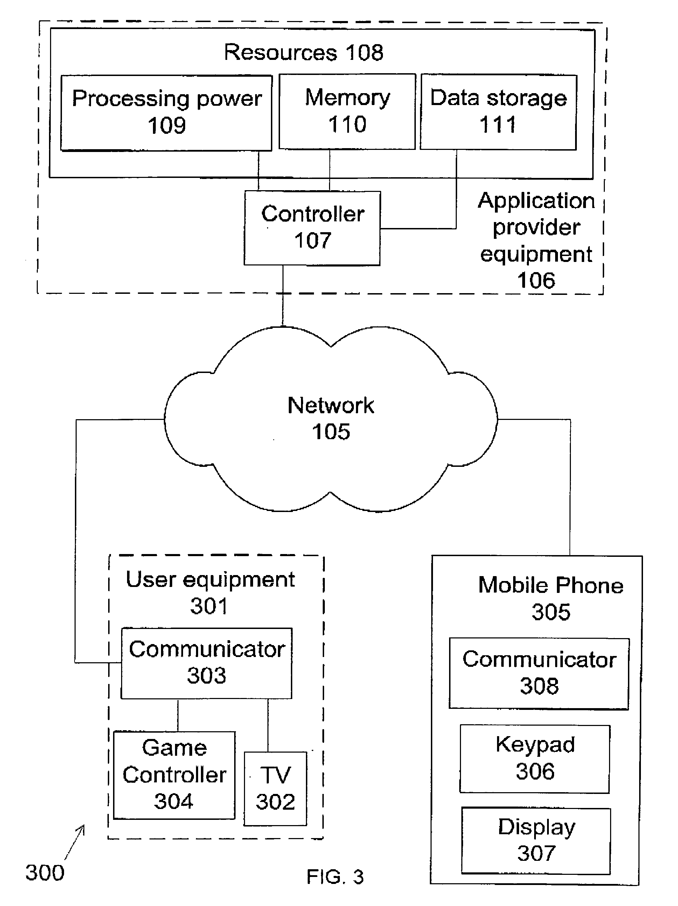

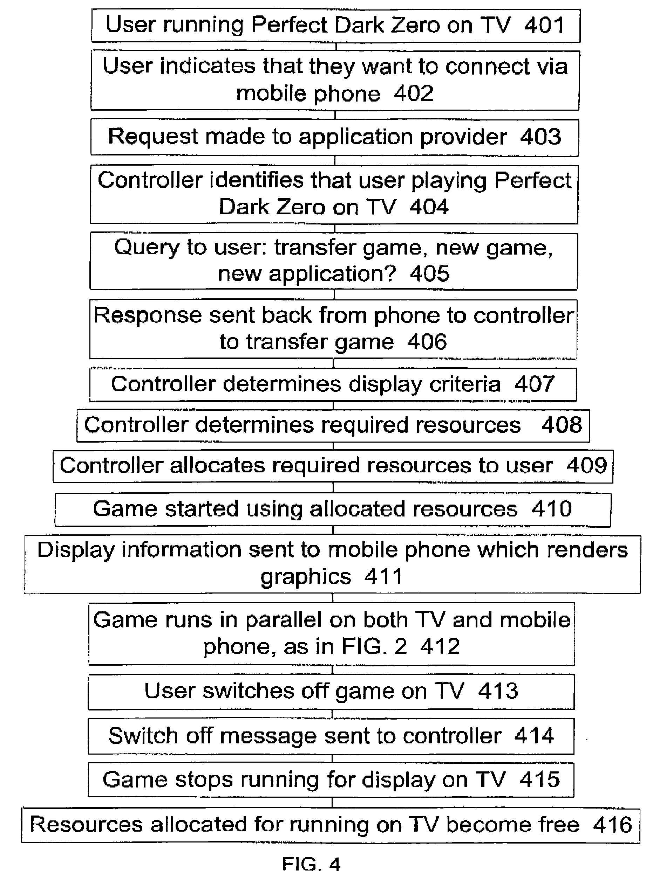

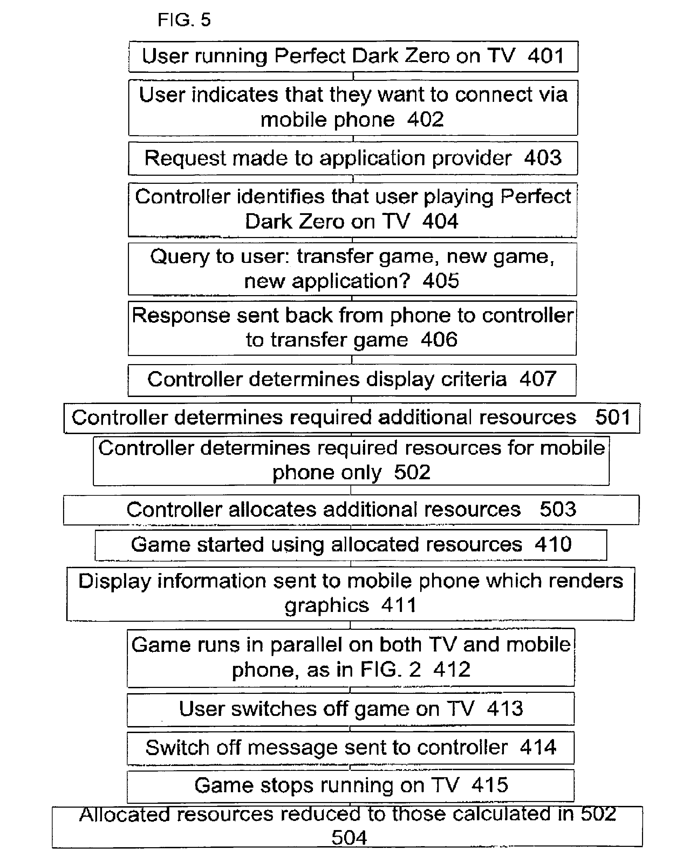

The operation of the system 100 of FIG. 1 can be described with reference to the flow diagram shown in FIG. 2. When a user wants to use an application, for example to play a game, they select the required application (step 201) using the user input device 102. The selection may be made by clicking on buttons on a web page or other graphical user interface (GUI). The communicator may run a program to generate the GUI. The communicator 104 sends a request for the required application to the application provider equipment 106 (step 202). The request includes information identifying the required application and information on the display 103 being used, referred to herein as information on display characteristics (e.g. details of the display capabilities, such as the screen size, resolution, dots per inch, number of pixels etc or details of the display type being used, such as high definition television, mobile phone screen, PDA screen or details of the model number etc). The information on display characteristics may be sent to the application provider equipment 106 in the form of explicit details of the characteristics or in a code or other representation which the application provider equipment can interpret and which provides the application provider equipment 106 with sufficient information to determine the display criteria (see step 203). The request may also include information on the identity of the user (e.g. user name), authentication information and billing information. Additionally, as described in more detail below, the request may include information on other aspects of the user equipment 101, user specified criteria and information from input devices.

On receipt of the request, the controller 107 detects the information on display characteristics and determines the display criteria (step 203). These criteria determine the format of display information that will subsequently be sent back to the user equipment 101 (see step 208 below). The controller also determines the required resources based on the application requested and the display being used (step 204). The determination may also be influenced by some or all of the other information included in the request. In an example, if the user requests a simple game (e.g. Solitaire), the required processing power will be small, however if a user requests a complex game (e.g. Halo®), the required processing power will be much larger. Furthermore, if the user is displaying the game on a mobile phone screen, only low resolution graphics will be required, which may impact the level of processing required, compared to if the user is using a large high definition television as the display, which will require very high quality graphics and may increase the processing power required. The user may also influence the determination of required resources (step 204), as described in more detail below.

Having determined the required resources, the controller allocates those resources to the user (step 205) in order that a minimum quality of service is guaranteed for that user. The system may enable the user to access additional resources above the required amount in periods when there is low resource usage at the application provider equipment 106, or the system may alternatively only allow the user to access those resources allocated to that user.

Once the resources are allocated, the application is started (step 206) and at the same time, a billing counter may be started (step 207). The application runs on the application provider equipment 106 (using the allocated resources) and display information is sent to the user over the network 105 (step 208). The display information is such that it enables the display 103 to render the required graphics (step 209) and the display information is formatted within the application provider equipment 106 according to the display criteria established earlier (in step 203), before being sent to the user equipment. The user controls the application (e.g. plays the game) using the user input device 102 in known ways and the user input information is sent by the communicator 104 to the controller 107 (step 210).

When the user has finished using an application (e.g. finished playing the game), they indicate this in known ways using the user input device 102 and this information is sent to the controller 107 (step 211) which stops the application (step 212). The resources which had been allocated to the user for the application then become free (step 213) and if a billing counter had been started (in step 207 above) this is then stopped (step 214). If a billing counter (or other means of measuring the use of the application by the user) has been used, then a charge for use of the application may be calculated based on some or all of the following parameters: the billing counter, the amount of resources allocated and the application used (step 215). The billing counter may record a length of time (e.g. the length of time that the user is accessing the application) or an amount of data transferred or other criteria. The billing may be done by advance payment (pre-pay), by account (e.g. settled monthly) or by payment on a per-session basis by payment card (e.g. credit or debit card) or payment account (e.g. Paypal®). The billing may be implemented either at the application provider end (e.g. for monthly billing) or at the user end (e.g. pre-pay). Alternatively billing may be implemented such that both ends participate in the process.

The flowchart in FIG. 2 shows a user actively indicating that they wish to finish using an application (in step 211). However, such an indication does not necessarily occur if, for example, the user's network connection is lost or the user equipment 101 crashes or is switched off. It may therefore be beneficial to include a polling mechanism in the system 100, such that the controller 107 regularly checks for the presence of the communicator 104, e.g. by sending messages requiring acknowledgement. Alternatively, the communicator 104 could be arranged to send regular messages to the controller 107 such that when a predetermined period has expired without the controller 107 receiving such a message, it is assumed that the contact with the user equipment 101 has been lost and the application is stopped (steps 212-215). The application provider equipment 106 may save the status of the application prior to closing it, so that the user can resume in the same place when the connection is re-established.

In another example, the user may pause the game rather than stopping it, for example to take a break, have a meal etc. In this case the user may indicate that they wish to pause the activity using the user input device 102 and this information is sent to the controller 107 (in a similar manner to that of step 211) which pauses the application. The controller may, at this point, save the current state of the game being played, including the current image being displayed on the user equipment and allow some or all of the resources allocated to the user to become free (as in step 213). This results in the resources being allocated efficiently (they do not remain allocated when the user is not actively playing the game). The controller may also pause the billing counter, which may result in a fairer charging scheme because it enables the user to pause a game and not continue to pay for the resources whilst they are not playing the game. During such a pause, the graphics on the display may be paused (i.e. remain unchanged) or screensaver graphics could be displayed or the display 103 could enter a power-saving mode.

In a further example, the user may not need to actively pause the game. Instead a lack of activity by the user could be detected, (e.g. by the communicator 104 and /or the controller 107) and as a result, the controller may allow some or all of the resources allocated to the user to become free. As soon as further activity by the user is detected, the full amount of resources originally allocated (as determined in step 204) would become available to the user again and the game would continue. The detection of lack of user activity may be implemented using a polling mechanism as described above, or a time out counter which is reset every time a user input is received by the controller 107 or communicator 104, or any other suitable detection mechanism. If the detection of lack of user activity is implemented in the communicator 104, upon detecting a change between an active state and an inactive state, the communicator 104 signals this to the controller 107. This automatic detection of lack of user activity is beneficial as it reduces the cost to the user whilst they are not actively using the application whilst not requiring them to remember to pause the application. As in the case for the active pausing of the application, the graphics on the display may remain unchanged during the period of inactivity or screensaver graphics could be displayed or the display 103 could enter a power-saving mode.

Although many computer games are reaction based, some games, such as chess, require considerable thought about strategy between moves. Consequently whilst playing such a game there may often be periods of several minutes (or longer) when no user input would be received. Again as described above, a lack of user input could be detected and as a result the controller may allow some or all of the resources allocated to the user to become free, until further activity is detected. For the periods where the resources become free, the controller may also pause the billing counter. This would reduce the cost to the user and allow resources to be more effectively shared at the application provider equipment. In addition to such strategic games, there may be other applications or situations where display information is transmitted in discrete packets from the application provider equipment to the user equipment. For example, when streaming audio or video and the available bandwidth of the transmission path is very large compared to the amount of data required for the display information, the audio or video could be transmitted in packets, e.g. 20 minutes of audio streamed in a packet every 20 minutes. Again between packets, the controller may allow some or all of the resources allocated to the user to become free and may also pause the billing counter, until the next packet is assembled and transmitted.

The flowchart of FIG. 2 shows the required resources being determined on the basis of the requested application and the display being used (in step 204). There may be other factors which are also used to determine the level of resources which are then allocated to the user (in step 205), including, but not limited to, the bandwidth of the connection between the user equipment 101 and the application provider equipment 106 across the network 105, user specified criteria, and the chosen mode of operation of the application (e.g. interactive or viewing only).

As mentioned above, the bandwidth of the connection to the user may be one of the factors used to determine the level of resources allocated to the user. The bandwidth of the connection may also (or instead) be one of the factors used to determine the display criteria (in step 203), such as refresh rate, resolution, part of the screen to be updated, compression, level of error coding. The bandwidth may also affect other aspects of the data sent to the user equipment. For example, if the bandwidth is very limited, sound may be dropped from a signal and only the visual display information transmitted to the user. Other factors, including those listed above, may also affect the display criteria determined by the controller,

For example, a user with a lower bandwidth connection may require compression of the display information before it is sent, and hence a larger amount of processing power might be required. Alternatively, where a user has selected very high resolution display information but is using only a mobile phone display, the controller may reduce the level of processing power required and not send the high quality graphics as requested as this information will be wasted on a small, low resolution display.

As mentioned above, the amount of resources allocated to a user is not necessarily controlled just by the controller 107. A user may specify, in part or entirely, the level of resources that they want or criteria by which the amount of resources is determined by the controller 107. For example, a user may wish to specify (and pay for) a large amount of processing power because they wish to have very responsive performance, even when running an application which is not processor-intensive. A user may also want to select the quality of the graphics being displayed on the display 103, for example, the user may choose to select a high, medium or low resolution picture. In an example, a user may wish to play solitaire on his high-definition TV. He does not require high resolution graphics for this game and may therefore choose to only have a low resolution display. This may be particularly appealing to a user because it may be cheaper. In another example, the user may want to select the number of frames per second that they receive. They may wish to receive the full rate (e.g. 60 frames/second) or they may select a lower rate (e.g. 20 or 30 frames/second). This may be particularly beneficial to the users who are unable to differentiate between 30 and 60 frames/second, and therefore do not need to pay for a performance level they do not benefit from. This may also be beneficial to users accessing applications where a fast update rate is not required (e.g. playing Solitaire or editing a document in a word processing application), as again they do not pay for a performance level which is unnecessary for their usage. In order to specify the requested amount of resources, the user may be presented with a menu or other GUI enabling them to select one or more of the following variables: the application, the mode of use of the application, processing power, sound quality, memory, display resolution and data storage. The menu may be accessed via a web page or via a program running on the communicator 104. The selection may be a free choice (e.g. selection of any value of a variable) or a selection from a list (e.g. high, medium or low resolution) or a selection of a value which is a multiple of a basic unit (e-g. memory in multiples of 256kB). The application provider equipment may specify a minimum level of resources that will be allocated to the user irrespective of the application and display being used. The application provider equipment may specify a maximum level of resources that any user can be allocated, in order that resources may be shared fairly between users. The selection options available to the user may depend on the display being used and/or the application requested. For example, a user on a mobile phone may not be able to request a high resolution picture as the display is not capable of providing this to the user. The menu or other selection tool may include an option to let the application provider determine the appropriate level of resources and appropriate display criteria. In addition to, or instead of specifying resource or performance requirements, the user may be able to specify criteria that influence the amount of resources allocated by the controller 107. Examples of such criteria include: lowest cost, maximum performance, fastest response etc. Such criteria may be selected by the user via tick boxes in a menu or other GUI. The criteria once selected may apply to a single request or may be applied by the controller 107 for all subsequent requests received from a user.

As the applications are being run remote from the user equipment, a user can transfer from one user equipment to another user equipment in a seamless manner, as described with reference to FIGS. 3 and 4 below.

FIG. 3 shows a second system 300 for providing applications to a user. The application provider equipment 106 is the same as shown in FIG. 1 and described above. The user in FIG. 3 has two devices by which they can access an application. The first is a substantially fixed device 301 where a television 302 is used as the display device. This first device 301 is referred to as a television based user equipment 301. The television 302 is connected to a communicator 303 and user input is by way of a game controller 304. The second device enabling a user to access applications is a mobile phone 305, which has integrated into it a keypad 306, a display 307 and a communicator 308. The keypad and the display may be integrated and comprise a touch-sensitive screen. Both the mobile phone 305 and the communicator 303 can connect to the application provider equipment 106 via a network 105. Although in FIG. 3 both are shown connected to the same network 105, it will be appreciated that they could use different networks to connect to the application provider equipment 106.

FIG.4 is a flow diagram showing how a user can seamlessly transfer an application between different pieces of user equipment, and is described with reference to the system 300 shown in FIG. 3.

Initially the user is accessing an application, e.g. the game Perfect Dark Zero, via the television based user equipment 301 (step 401). The connection to this application may have been established as shown in FIG. 2 steps 201-210 and described above. The user may, for example, be playing the game on their television and then need to leave their house to commute to work. Consequently they may wish to be able to transfer their game play to their mobile phone and continue playing whilst on the bus or train.

The user indicates, using the keypad 306, that they want to connect to the application provider equipment 106 (step 402). This may be achieved by the user selecting an icon on the mobile phone's display 307 in a similar manner to selecting the address book or WAP browser. The user may, as part of this step, indicate which application they wish to access (e.g. Perfect Dark Zero, in this example scenario). The communicator 308 sends a request to the application provider equipment 106 (step 403). The request includes information identifying the user (e.g. a user name and password), the required application, if identified by the user in step 402, and information on the display 307 being used (e.g. details of the display capabilities).

On receipt of the request, the controller 107 identifies that the user is already connected via a different user equipment 301 and that they are currently playing the game Perfect Dark Zero on that user equipment (step 404). The controller 107 may then send a query to the user via the mobile phone 305 and its display 307 providing the user with options such as: transfer game to mobile, start new game, start new application etc (step 405) to which the user can respond via the keypad 306 and the response is sent by the communicator 308 back to the controller 107. In this example, the user responds indicating that they wish to transfer the game to the mobile 305 (step 406).

The controller 107 then determines the display criteria for the mobile phone (step 407). The controller also determines the required resources based on the application requested and the display being used (step 408). Having determined the required resources, the controller allocates those resources to the user (step 409). These resources allocated may be in addition to the resources that will already have been allocated such that the application can run on the television based user equipment 301. The amount of resources allocated for running Perfect Dark Zero on the mobile phone 305 may be the same as that allocated for running the game on the television based user equipment 301. Alternatively, the amount of resources allocated may be smaller for playing the game on the mobile phone 305 because the display 307 is likely to be of considerably lower resolution and size than the television 302.

Once the resources are allocated, the application is started (step 410). Display information, formatted according to the display criteria (determined in step 407) is sent to the mobile phone 305 where the graphics are rendered on the display 307 (step 411). From this point the game continues in parallel on both pieces of user equipment (step 412) as described above in reference to FIG. 2 steps 208-210.

The user can then switch off the television or switch off the game on the television based user equipment 301 (step 413) and a message to this effect is sent to the controller 107 (step 414). The application then stops running for display on this user equipment 301 (step 415) and the resources which were previously allocated for running the application to be shown on this display become free (step 416). From this point, the user continues to play the game only on their mobile phone 305 until they wish to transfer the game to another user equipment (e.g. using the method shown in FIG. 4) or stop playing the game (e.g. using the method shown in FIG. 2).

In the example method shown in FIG, 4, the query in step 405 is communicated to the user via the mobile phone 305. Alternatively or in addition, the query could be communicated to the user via the television based user equipment 301. Correspondingly, the response to the user (in step 406) could be made via either the game controller 304 or the keypad 306.

In the example method shown in FIG. 4, the user has to confirm that they wish to transfer the game on to the mobile phone (in steps 405-406). However, in another example, the controller may automatically start the game for the mobile phone (steps 405-406 not required) once it has determined that the user has an existing application running (in step 404) unless the user specifically cancels this action. This may result in less disturbance of the user's game play.

In a further example, the user may have already indicated the required application (in step 402). In this case, the application may be started automatically or where the indicated application (in step 402). is the same as the application that is already running (as determined in step 404), the user may be given the option of starting a new game (i.e. a new version of the same application but on a different user equipment) or transferring the game to the second user equipment.

The flow diagram of FIG. 4 does not show any billing activity. A first billing counter may have been started when the resources were initially allocated for running the game for the television based user equipment 301 (as in step 207 of FIG. 2). When the controller allocates the additional resources (in step 409), a second billing counter may be started. The first billing counter will stop when the initial resources become free (in step 416) and the second billing counter will continue. This may result in the user being billed for two sets of resources for the period (between steps 409 and 416) where the game is being displayed on both sets of user equipment.

In steps 408-409 above, the controller determined the required resources and allocated these in addition to the resources which were previously allocated for running the application for use via the television based user equipment 301 (as in step 205 of FIG. 2). However, in another example, the resources may be determined and allocated in a different manner, as shown in the flow chart of FIG. 5, where many steps are common with FIG. 4 and are described above.

The controller determines (in step 501 which is an alternative to step 408) the additional resources required for the user to access the application on both the television based user equipment 301 and the mobile phone 305. This determination is based on the application (in this case Perfect Dark Zero) and the display criteria for each display (as determined in steps 407 and 203 from FIGS. 5 and 2 respectively). These additional resources may be the resources that are required to format the display information for the mobile phone and transmit it across the network and also any resources required to process user inputs received from the mobile phone.

The controller also determines, either at this point or at any point before step 504, the amount of resources required for the user to access the application on only the mobile phone (step 502). This determination is based on the application and the display criteria determined in step 407. The controller then allocates the additional resources required, as determined above in step 501, in addition to the resources that have been allocated earlier to the user (step 503).

Once the application has stopped running on the television based user equipment (in step 415), the amount of resources allocated to the user is reduced such that it is just what is required to use the application on the mobile phone 305 (step 504). The remainder of the allocated resources therefore become free and can be subsequently allocated to a different user.

A possible billing arrangement for the method shown in FIG. 5 requires 3 billing counters, with a first counting the length of time that the initial resources are allocated to the user, the second counting the length of time that the additional resources are allocated to the user and the third counting the length of time that the final, mobile phone only, resources are allocated to the user. An application provider may choose to bill for the second counter or may absorb this cost themselves.

FIGS. 4 and 5 show that the application runs in parallel on each of the two user equipment devices 301, 305. However, in an alternative example, the game could be paused whilst the transfer between user equipment occurs. The game may be paused at the point that the request to transfer is made (at step 403) or at a later point before the game starts for the second user equipment (before step 410). Pausing the game allows the user to be able to pick up the second user equipment without missing any of the game. Pausing also eliminates the need for resources to be allocated such that the game can be played and displayed on two pieces of user equipment simultaneously (e.g. no need for additional resources determined and allocated in steps 501 and 503). Additionally, using such a pause facility may reduce additional cost to the user (no need for the second billing counter, as described in the paragraph above). A user may be presented with an option (e.g. in the query of step 405) of whether to pause the game or not whilst the transfer is taking place.

FIGS. 1-5 and the corresponding description above refer to the display information being sent from the application provider equipment to the user equipment. In addition, sound information and/or other sensory information could be sent to the user equipment by the application provider equipment. The sound or other sensory information would also be formatted by the application provider equipment prior to being sent, and this formatting would be according to appropriate criteria determined by the application provider equipment based on information received about the equipment which the user is using. The sound information may be sounds that accompany the playing of a game, beeps or other noises which may serve as warnings or notifications when running applications, streaming audio or a sound track which accompanies the display information being sent to the user. The other sensory information could include vibrations the user could feel (e.g. via a game controller 304 or mobile phone 305) or other visual effects (e.g. flashing lights on a mobile phone 305).

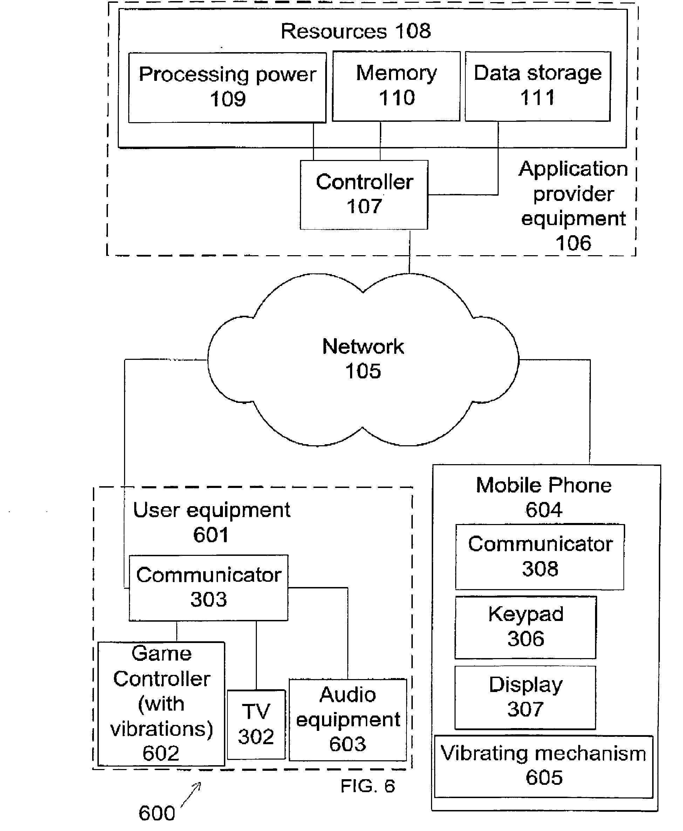

The sound criteria may be determined based on information on the user's audio equipment referred to herein as information on audio characteristics, which may be provided in the request for an application (step 202 in FIG. 2) or subsequently. This information may either explicitly detail the capabilities or type of audio equipment that is part of or is connected to the user equipment (as shown in FIG. 6), e.g. number of speakers, speaker type, whether surround sound capable, headphone type, dynamic range etc or the information may be a code or other representation which can be interpreted by the application provider equipment 106. The user may also provide some input which affects the sound criteria such as required quality, level of compression etc.

Other sensory criteria may be determined based on information on the particular capabilities of the user equipment which may be provided in the request for an application (step 202 in FIG. 2) or subsequently. As with the information on display characteristics and information on audio characteristics as described above, the information on the other sensory characteristics may either explicitly detail the capabilities or type of equipment that is part of or is connected to the user equipment or may be a code or other representation which can be interpreted by the application provider equipment 106.

FIG. 6 shows a third system 600 for providing applications to a user. Many of the elements are common with FIGS. 1 and 3. However, in the system shown in FIG. 6 the user equipment 601 includes a game controller with capability for vibrations 602 and audio equipment 603 whilst the second user equipment which is a mobile phone 604 includes a vibrating mechanism 605.

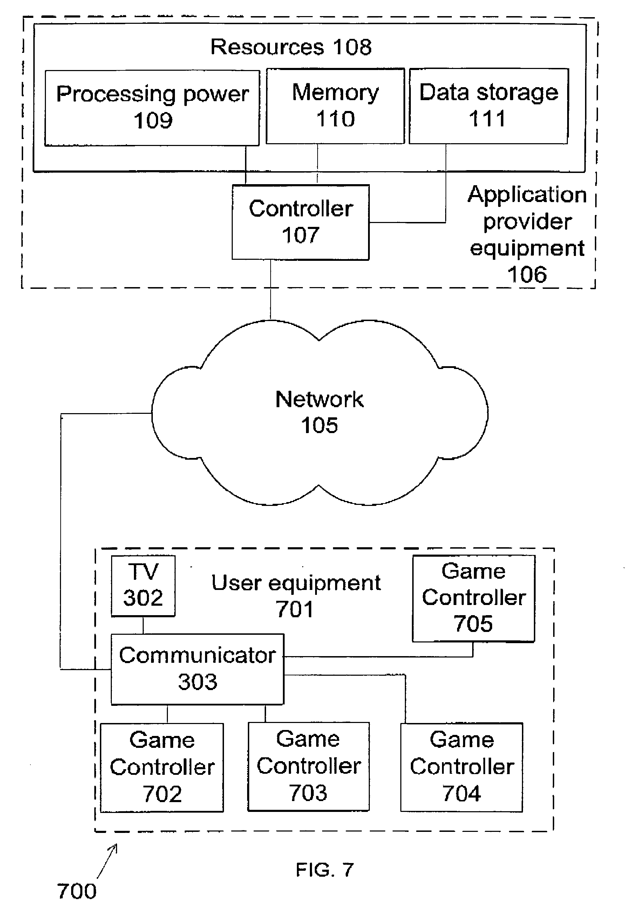

FIG.7 shows a fourth system 700 for providing applications to the user. Many elements in the system 700 are the same as that shown in FIG. 3. The user equipment 701 includes a single communicator 303 connected to a television 302 as display device. There are also a number of game controllers 702 - 705 connected to the communicator 303 to enable more than one player to play the game at the same time. All the players however, view the same image on the television 302.

In one example a single user using a game controller 702 may have started playing a game running on the application provider equipment 106 in a manner as described above with reference to FIGS. 1 and 2. Subsequently, additional users may join the game using the additional game controllers 703 - 705. The addition of the extra game controllers may require a small amount of additional processing power to be provided at the application provider equipment 106. Consequently when an additional game controller connects to the communicator 303 the communicator may send a signal to the application provider equipment 106 including information on the additional apparatus which has just been connected to it. This enables the application provider 106 to recalculate the amount of resources required in a manner as described above. In this example the first user may be billed for all the resources allocated (the original resources plus the additional resources required to add the additional game controllers to the game). Alternatively separate billing could occur for the additional resources required for each additional controller when it connects. These additional amounts of resources required when additional controllers are added are likely to be small because they are all watching a single display.

In a second example, all four game controllers may be active at the time that the communicator requests the application from the application provider equipment 106 and therefore information on all the elements within the user equipment 701 may be sent in the initial request to enable the application provider equipment 106 to determine the correct amount of resources to allocate.

FIGS. 1, 3, 6 show a single user input device 102, 304, 306, 602, 603 in each user equipment 101, 301, 305, 601, 604, whilst FIG. 7 shows a user input device 702-705 per user in the user equipment 701. In another embodiment, the user equipment could comprise more than one user input device. For example, the user equipment could be a computer or a mobile phone (as in FIGS. 3 and 6) which includes multiple elements that can be used to provide user inputs. e.g. keypad, microphone and camera. Information from one or more of these user input devices may be communicated to the controller 107, e.g. key strokes, sounds, speech, output from a speech recognition element in the phone, still photographs, movie clips etc. As described earlier, the user equipment may not be an integrated piece of equipment but instead be a collection of separate entities that can communicate via wired or wireless links. For example, the communicator 104 (shown in FIG. 1) may be able to connect to other user input devices, e.g. mobile phone, digital camera, such that additional information can be communicated to the controller 107.

In addition to, or instead of, user input devices, the user equipment may comprise additional input devices. Such additional input devices may provide information from external sources, such as location information, other sensor information etc. For example, the user equipment may be a mobile phone (as in FIGS. 3 and 6) which includes a GPS (Global Positioning System) receiver and therefore information on the location of the user equipment may be communicated to the controller 107. As described above, the additional input devices need not be integrated into the user equipment but may be connectable to the communicator by wired or wireless links. Examples of such additional input devices include, but are not limited to, a GPS receiver, a wireless receiver and an RFID (Radio Frequency Identification) reader.

The additional information provided by the extra user input devices or the additional input devices may communicated to the controller 107 as part of the request for the application (in step 202) or separately (e.g. in step 310). Once received by the controller, the information may control or influence an application being run. For example, images from a camera may be incorporated into a game, location information may be recorded in files or used to affect the operation of a game etc.

The above examples have been described with reference to games. It will be apparent that the invention is applicable to all types of applications including streaming video and / or audio from the application provider equipment. The user may be able to select tracks / videos for download and the display and / or audio information is then formatted according to the criteria determined by the application provider equipment before being sent to the user equipment. The user may be billed according to what they watch or listen to and the quality or resources used to transmit or process the data.

In FIGS, 1, 3, 6 and 7, the application provider equipment 106 is shown grouped together- The elements which make up the application provider equipment need not be co-located and may be distributed across a network or across several networks. Each resource may also be distributed and the controller function may be distributed with several elements being able to perform this function. Having a distributed architecture and multiple physical elements that are capable of the same Function provides benefits in the reliability and resilience of the system.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person. A skilled person will also appreciate that although a particular order of method steps is described above, this is by way of example only and some or all of the steps may be performed in a different order without losing the effect sought.

It will be appreciated that the order of the steps shown in FIGS. 2, 4 and 5 and described above is just one example. The steps may be performed in different orders and some or all steps may be performed substantially simultaneously without losing the effect sought.

It will be understood that the above description of preferred embodiments is given by way of example only and that various modifications may be made by those skilled in the art.

## Claims

1. A method of providing an application to a user across a network comprising:
receiving a request for an application from a user (202), the request including information on display characteristics for a user equipment;
determining an amount of resources required to run the application for the user equipment (204);
allocating the amount of resources to the user (205);
determining display criteria from the information on display characteristics (203); and
running the application using the allocated resources (206, 207, 208),
wherein the step of running the application includes sending display information to the user equipment and receiving user input information from the user, wherein the display information is formatted according to the display criteria.

2. A method of providing an application to a user according to claim 1, wherein the resources (108) comprises at least one of processing power (109), memory (110) and data storage (111).

3. A method of providing an application to a user according to claim 1 or 2, wherein the request includes user specified criteria and the step of determining an amount of resources is based on the application, the information on display characteristics and the user specified criteria.

4. A method of providing an application to a user according to any of the preceding claims, wherein the request includes user specified criteria and the step of determining display criteria is based on the information on display characteristics and the user specified criteria.

5. A method of providing an application to a user according to claim 3 or 4, wherein the user specified criteria include at least one of processing power, sound quality, memory, display quality, data storage and mode of operation of the application.

6. A method of providing an application to a user according to any of claims 1-3, wherein the request includes information on bandwidth of a network connection used by the user and the step of determining display criteria is based on the information on display characteristics and the information on bandwidth.

7. A method of providing an application to a user according to any of the preceding claims, wherein the request includes at least one of identification information, authentication information and billing information.

8. A method of providing an application to a user according to any of the preceding claims, further comprising:
stopping running the application in response to an input received from the user (212); and
cancelling the allocation of the amount of resources to the user (213).

9. A method of providing an application to a user according to any of the preceding claims, wherein the request includes information on audio characteristics for the user equipment, the method further comprises:
determining sound criteria from the information on audio characteristics, and
wherein the step of running the application further includes sending audio information to the user equipment, the audio information being formatted according to the sound criteria.

10. A method of providing an application to a user according to any of the preceding claims, further comprising:
receiving a request from the user to run the application for a second user equipment (403), the request including information on display characteristics for the second user equipment;
determining a second amount of resources required to run the application for the second user equipment (408; 501);
allocating additional resources to the user (409; 503);
determining second display criteria from the information on display characteristics for the second user equipment (407);
sending second display information to the second user equipment (411), the second display information being formatted according to the second display criteria;
stopping sending display information to the user equipment (415); and
canceling a portion of the resources allocated to the user, such that the second amount of resources remains allocated to the user (416; 502).

11. A method of providing an application to a user according to claim 10, wherein the step of stopping sending display information occurs on receipt of an input from the user (414).

12. A method of providing an application to a user according to any of the preceding claims, wherein the application is a game.

13. Apparatus for providing an application to a user across a network (105), comprising a resource (108) and a controller (107), wherein the controller comprises:
means for receiving a request for an application from a user across a network;
means for determining a portion of the resource required to run the application for the user equipment;
means for allocating the portion to the user;
means for detecting information on display characteristics for a user equipment from the request;
means for determining display criteria from the information on display characteristics; and
means for running the application using the portion of the resource, including sending display information to the user equipment and receiving user input information from the user, wherein the display information is formatted according to the display criteria.

14. Apparatus for providing an application to a user according to claim 13, wherein the resource comprises at least one of a processing resource (109), a memory resource (110) and a data storage resource (111).

15. Apparatus for providing an application to a user according to claim 13 or 14, wherein the controller further comprises:
means for detecting user specified criteria from the request; and
means for determining the portion of the resource based on the application, the information on display characteristics and the user specified criteria.

16. Apparatus for providing an application to a user according to any of claims 13-15, wherein the controller further comprises:
means for receiving a second request from the user to run the application for a second user equipment;
means for determining a second amount of resources required to run the application for the second user equipment;
means for allocating additional resources to the user:
means for detecting information on display characteristics for the second user equipment from the second request;
means for determining second display criteria from the information on display characteristics for the second user equipment:
means for sending second display information to the second user equipment, the second display information being formatted according to the second display criteria;
means for stopping sending display information to the user equipment; and
means for cancelling a portion of the resources allocated to the user, such that the second amount of resources remains allocated to the user.

17. Apparatus for providing an application to a user according to any of claims 13-16, wherein the application is a game.

18. Apparatus for accessing an application from a remote server, comprising:
a display (103);
a user input device (102); and
a communicator (104) comprising:
means for sending a request for an application to the remote server, the request including information on characteristics of the display;
means for receiving display information from The remote server and pass it to the display, the display information being formatted for the display; and
means for receiving user input information from the user input device and send it to the remote server,
wherein the display information comprises graphical information associated with the application and the user input information controls the application on the remote server.

19. Apparatus for accessing an application from a remote server according to claim 18, wherein the request includes at least one of identification information, authentication information and billing information.

20. Apparatus for accessing an application from a remote server according to claim 18 or 19, wherein the application is a game.
